# FASCICULE DE BREVET EUROPEEN

(11) **EP 3 174 737 B1**
(45) Date de publication et mention de la délivrance du brevet: **12.09.2018**
(21) Numéro de dépôt: 15736816.8
(22) Date de dépôt: 08.07.2015
(51) Int. Cl.: B60C 9/28, B60C 9/22

(54) **ARMATURE DE SOMMET DE PNEUMATIQUE POUR AVION**
GÜRTELVERSTÄRKUNG FÜR EINEN FLUGZEUGREIFEN
CROWN REINFORCEMENT FOR AN AIRCRAFT TYRE

(30) Priorité: 30.07.2014 FR 1457378
(43) Date de publication de la demande: 07.06.2017
(73) Titulaire: Compagnie Générale des Etablissements Michelin, 63000 Clermont-Ferrand (FR)
(72) Inventeur: JOULIN, Emmanuel, F-63040 Clermont-Ferrand Cedex 9 (FR); ESTENNE, Vincent, F-63040 Clermont-Ferrand Cedex 9 (FR)
(74) Mandataire: Millanvois, Patrick Jacques Jean
(86) Numéro de dépôt international: PCT/EP2015/065590
(87) Numéro de publication internationale: WO 2016/015964

(56) Documents cités:
- WO-A1-2010/000747
- FR-A1- 2 983 121

## Description

La présente invention concerne un pneumatique pour avion, et, en particulier, le sommet d'un pneumatique pour avion.

Un pneumatique comprend un sommet comprenant une bande roulement destinée à venir en contact avec le sol par l'intermédiaire d'une surface de roulement, deux bourrelets destinés à venir en contact avec une jante et deux flancs reliant le sommet aux bourrelets. Un pneumatique radial, tel que généralement utilisé pour un avion, comprend plus particulièrement une armature de carcasse radiale et une armature de sommet, telles que décrites, par exemple, dans le document EP 1 381 525.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien.

Dans ce qui suit, les expressions « radialement intérieur à» et « radialement extérieur à» signifient respectivement « plus proche de l'axe de rotation du pneumatique, selon la direction radiale, que » et « plus éloigné de l'axe de rotation du pneumatique, selon la direction radiale, que ». Les expressions « axialement intérieur à» et « axialement extérieur à» signifient respectivement « plus proche du plan équatorial, selon la direction axiale, que » et « plus éloigné du plan équatorial, selon la direction axiale, que ». Une « distance radiale » est une distance par rapport à l'axe de rotation du pneumatique, et une « distance axiale » est une distance par rapport au plan équatorial du pneumatique. Une « épaisseur radiale » est mesurée selon la direction radiale, et une « largeur axiale » est mesurée selon la direction axiale.

L'armature de carcasse radiale est la structure de renforcement du pneumatique reliant les deux bourrelets du pneumatique. L'armature de carcasse radiale d'un pneumatique pour avion comprend généralement au moins une couche d'armature de carcasse, dite couche de carcasse. Chaque couche de carcasse est constituée d'éléments de renforcement enrobés dans un matériau polymérique, parallèles entre eux et faisant, avec la direction circonférentielle, un angle compris entre 80° et 100°. Chaque couche de carcasse est unitaire, c'est-à-dire qu'elle ne comprend qu'un seul élément de renforcement dans son épaisseur.

L'armature de sommet est la structure de renforcement du pneumatique radialement intérieure à la bande de roulement et le plus souvent radialement extérieure à l'armature de carcasse radiale. L'armature de sommet d'un pneumatique pour avion comprend généralement au moins une couche d'armature de sommet, dite couche de sommet. Chaque couche de sommet est constituée d'éléments de renforcement enrobés dans un matériau polymérique, parallèles entre eux et faisant, avec la direction circonférentielle, un angle compris entre +20° et -20°. Chaque couche de sommet est unitaire, c'est-à-dire qu'elle ne comprend qu'un seul élément de renforcement dans son épaisseur.

Parmi les couches de sommet, on distingue les couches de travail composant l'armature de travail, constituées le plus souvent d'éléments de renforcement textiles, et les couches de protection composant l'armature de protection, constituées d'éléments de renforcement métalliques ou textiles, et disposées radialement à l'extérieur de l'armature de travail. Les couches de travail conditionnent le comportement mécanique du sommet. Les couches de protection protègent essentiellement les couches de travail des agressions susceptibles de se propager à travers la bande de roulement radialement vers l'intérieur du pneumatique. Une couche de sommet, en particulier une couche de travail, est souvent une couche axialement large, c'est-à-dire qu'elle a une largeur axiale, par exemple, au moins égale au deux tiers de la largeur axiale maximale du pneumatique. La largeur axiale maximale du pneumatique est mesurée au niveau des flancs, le pneumatique étant monté sur sa jante et faiblement gonflé, c'est-à-dire gonflé à une pression égale à 10% de la pression nominale telle que recommandée, par exemple, par la Tire and Rim Association ou TRA.

Le pneumatique peut également comprendre une armature de frettage, radialement intérieure ou radialement extérieure à l'armature de sommet, voire intercalée entre deux couches de sommet. L'armature de frettage d'un pneumatique pour avion comprend généralement au moins une couche d'armature de frettage, dite couche de frettage. Chaque couche de frettage est constituée d'éléments de renforcement enrobés dans un matériau polymérique, parallèles entre eux et faisant, avec la direction circonférentielle, un angle compris entre +10° et -10°. Une couche de frettage est le plus souvent une couche de travail axialement étroite, c'est-à-dire qu'elle a une largeur axiale sensiblement inférieure à la largeur axiale d'une couche de sommet et, par exemple, au plus égale à 80% de la largeur axiale maximale du pneumatique. Par largeur axiale, on entend la distance axiale entre les éléments de renforcement les plus axialement extérieurs de la couche de frettage, que la distance entre chaque éléments de renforcement soit constante ou non dans la direction axiale.

Les éléments de renforcement des couches de carcasse, de travail et de frettage, pour les pneumatiques pour avion, sont le plus souvent des câbles constitués de filés de filaments textiles, préférentiellement en polyamides aliphatiques ou en polyamides aromatiques. Les éléments de renforcement des couches de protection peuvent être soit des câbles constitués de fils métalliques, soit des câbles constitués de filés de filaments textiles. On nomme pas de renforcement la distance axiale entre les centres de deux éléments de renforcement consécutifs d'une couche. Pour les armatures sommet et de frettage, ce pas est le plus souvent constant dans la direction axiale.

Concernant les éléments de renforcement textiles, les propriétés mécaniques en extension (module, allongement et force à la rupture) des éléments de renforcement textiles sont mesurées après un conditionnement préalable. Par "conditionnement préalable", on entend le stockage des éléments de renforcement textiles pendant au moins 24 heures, avant mesure, dans une atmosphère standard selon la norme européenne DIN EN 20139 (température de 20 +/- 2°C ; hygrométrie de 65 +/- 2 %). Les mesures sont réalisées de manière connue à l'aide d'une machine de traction ZWICK GmbH & Co (Allemagne) de type 1435 ou de type 1445. Les éléments de renforcement textiles subissent une traction sur une longueur initiale de 400 mm à une vitesse nominale de 200 mm/min. Tous les résultats sont des moyennes de 10 mesures.

Les pneumatiques pour avion présentent souvent une usure non uniforme de la bande de roulement, appelée usure irrégulière, résultant des sollicitations au cours des différentes phases de vie du pneumatique : décollage, roulage et atterrissage. Il a été plus particulièrement mis en évidence une usure différentielle de la bande roulement entre une partie médiane et les deux parties latérales de la bande de roulement, axialement extérieures à la partie médiane. Usuellement, il est souhaité que l'usure de la partie médiane soit plus importante et pilote la durée de vie du pneumatique. Dans certains cas, l'usure différentielle susmentionnée exacerbe l'usure des parties latérales de la bande de roulement, qui devient dominante par rapport à l'usure de la partie médiane, ce qui entraîne un retrait prématuré du pneumatique économiquement préjudiciable.

Il est connu de l'homme du métier que l'usure de la bande de roulement d'un pneumatique dépend de plusieurs facteurs liés à l'usage et à la conception du pneumatique. L'usure dépend en particulier de la forme géométrique de la surface de contact de la bande de roulement du pneumatique avec le sol et de la répartition des contraintes mécaniques dans cette surface de contact. Ces deux paramètres sont fonction du profil méridien gonflé de la surface de roulement. Le profil méridien gonflé de la surface de roulement est la coupe de la surface de roulement, par un plan méridien, pour un pneumatique gonflé à sa pression nominale et non chargé.

Pour augmenter la durée de vie du pneumatique, vis-à-vis de l'usure différentielle de la partie médiane de la bande de roulement, l'homme du métier a cherché à optimiser la forme géométrique du profil méridien gonflé de la surface de roulement.

Le document EP 1 163 120 présente une armature de sommet d'un pneumatique pour avion, dont on cherche à limiter les déformations radiales lors du gonflage du pneumatique à sa pression nominale, ce qui permet de limiter les déformations radiales du profil méridien gonflé de la surface de roulement. La limitation des déformations radiales de l'armature de sommet, lors du gonflage du pneumatique à sa pression nominale, est obtenue par une augmentation des rigidités d'extension circonférentielles des couches de sommet, obtenue par le remplacement des éléments de renforcement des couches de sommet, usuellement en polyamides aliphatiques par des éléments de renforcement en polyamides aromatiques. Les modules d'élasticité des éléments de renforcement en polyamides aromatiques étant supérieurs à ceux des éléments de renforcement en polyamides aliphatiques, les allongements des premiers, pour une sollicitation en extension donnée, sont plus faibles que ceux des seconds.

Le document EP 1 381 525 précédemment cité propose une voie d'action sur la forme géométrique du profil méridien gonflé de la surface de roulement en faisant évoluer les rigidités d'extension des couches de sommet et/ou de carcasse. Ce document propose l'utilisation d'éléments de renforcement hybrides, c'est-à-dire constitués à la fois de polyamides aliphatiques et de polyamides aromatiques, à la place des usuels éléments de renforcement en polyamides aliphatiques. Ces éléments de renforcement hybrides ont des modules d'élasticité supérieurs à ceux des éléments de renforcement en polyamides aliphatiques, donc ont des allongements plus faibles, pour une sollicitation en extension donnée. Les éléments de renforcement hybrides sont utilisés dans les couches de sommet, pour augmenter les rigidités d'extension circonférentielles, et/ou dans les couches de carcasse, pour augmenter les rigidités d'extension dans le plan méridien.

Le document EP 1 477 333 propose une autre voie d'action sur la forme géométrique du profil méridien gonflé de la surface de roulement en faisant évoluer axialement la rigidité d'extension circonférentielle globale de l'armature de sommet, de telle sorte que le rapport entre les rigidités d'extension circonférentielles globales des parties axialement les plus extérieures de l'armature de sommet et de la partie médiane de l'armature de sommet soit compris dans un intervalle défini. La rigidité d'extension circonférentielle globale de l'armature de sommet résulte de la combinaison des rigidités d'extension circonférentielles des couches de sommet. La rigidité d'extension circonférentielle globale de l'armature de sommet varie dans la direction axiale, en fonction de l'évolution du nombre de couches de sommet superposées. La solution proposée est basée sur une répartition axiale des rigidités d'extension circonférentielles globales entre la partie médiane et les parties axialement les plus extérieures de l'armature de sommet, la partie médiane étant plus rigide que les parties axialement les plus extérieures de l'armature de sommet. Les éléments de renforcement utilisés dans les couches de sommet ou de carcasse sont en polyamides aliphatiques, en polyamides aromatiques ou hybrides.

Le document WO 2010000747 décrit un pneumatique pour avion, dont la pression nominale est supérieure à 9 bars et la flèche sous charge nominale supérieure à 30%, comprenant une bande de roulement ayant une surface de roulement, une armature de sommet, comprenant au moins une couche de sommet, une armature de carcasse comprenant au moins une couche de carcasse, lesdites surface de roulement, armature de sommet et armature de carcasse étant respectivement définies géométriquement par des profils méridiens initiaux. Selon l'invention, le profil méridien initial de l'armature de sommet est localement concave sur une partie médiane de largeur axiale au moins égale à 0,25 fois la largeur axiale de l'armature de sommet. La solution technique décrite par le document WO 2010000747 permet d'augmenter la durée de vie sur usure d'un pneumatique pour avion, par une limitation de l'usure différentielle de la bande de roulement, entre une partie médiane et les parties latérales axialement extérieures à cette partie médiane.

Si le pneumatique dure plus longtemps en raison d'une usure plus régulière dans la largeur de la bande de roulement, ses performances d'endurance doivent être garanties pendant toute sa durée de vie plus longue grâce à cette meilleure usure. En particulier, l'endurance du sommet du pneumatique, c'est-à-dire sa capacité à résister dans la durée aux fortes sollicitations mécaniques auxquelles est soumis le pneumatique, doit être améliorée. Par fortes sollicitations mécaniques, on entend, par exemple et de façon non limitative, dans le cas d'un pneumatique pour avion de ligne, une pression nominale supérieure à 15 bars, une charge nominale supérieure à 20 tonnes et une vitesse maximale de 360 km/h.

Le document WO 2013079351A1 propose une amélioration de la solution décrite dans le document WO 2010000747 utilisant un profil méridien initial de l'armature de sommet localement concave. Cette amélioration consiste en l'optimisation de la géométrie de l'armature de carcasse radiale et de l'armature de travail, par le choix d'une distance continûment décroissante entre la couche de carcasse la plus radialement extérieure et la couche de travail la plus radialement intérieure à partir du plan équatorial.

Le passage d'un profil méridien classique respectivement des armatures de carcasse et de travail, tel que décrit dans le document EP 1 381 525, à un profil concave tel que décrit dans le document WO2013079351A1 génère une augmentation significative de tension dans les éléments de renforcement des couches de travail ; de l'ordre de +15% au niveau du plan équatorial pour un même empilement radial de couches de carcasse et de couches de travail et un même rayon moyen du profil méridien radialement extérieur de la bande de roulement. La pression d'éclatement du pneumatique diminue d'autant à iso constituants ; ce qui peut remettre en cause l'homologation du pneumatique par les tests réglementaires, en vue de sa commercialisation. Par ailleurs l'utilisation d'un frettage à pas constant sur la largeur de la couche de frettage tel que le suggère la continuité de la décroissance de la distance entre la couche de carcasse la plus radialement extérieure et la couche sommet la plus radialement intérieure depuis le plan équateur vers les limites axiales des portions concaves, n'est pas optimale d'un point de vue de la masse du pneumatique et donc de son coût.

Les inventeurs se sont donné pour objectif d'améliorer l'endurance de l'armature de travail d'un pneumatique pour avion, lorsque sa durée de vie est augmentée vis à vis de l'usure de la bande de roulement tout en diminuant le coût de revient industriel par la baisse de la masse du pneumatique.

Cet objectif a été atteint par un pneumatique pour avion comprenant :
- une bande de roulement,
- une armature de travail radialement intérieure à la bande de roulement et comprenant au moins une couche de travail,
- la couche de travail radialement intérieure ayant une largeur axiale au moins égale aux deux tiers de la largeur axiale maximale du pneumatique et comprenant une portion médiane concave,
- une armature de carcasse radialement intérieure à l'armature de travail et comprenant au moins une couche de carcasse,
- une armature de frettage radialement extérieure à l'armature de carcasse et comprenant au moins une couche de frettage,
- la couche de frettage ayant une largeur axiale au plus égale à 0.8 fois la largeur de la couche de travail la plus large et comprenant des éléments de renforcement parallèles entre eux et inclinés, par rapport à la direction circonférentielle, d'un angle compris entre +10° et -10°
- les éléments de renforcement de la couche de frettage ayant un diamètre moyen D,
- la couche de frettage comprenant au moins une discontinuité axiale de largeur axiale au moins égale à trois fois le diamètre moyen D des éléments de renforcement.

L'armature de travail d'un pneumatique est généralement constituée d'une pluralité de couches de travail radialement superposées et ayant, dans un plan méridien du pneumatique, des largeurs axiales généralement différentes d'une couche à l'autre, afin d'étager les extrémités axiales desdites couches de sommet. L'armature de travail comprend généralement au moins une couche de travail dite large, c'est-à-dire que sa largeur axiale est au moins égale aux deux tiers de la largeur axiale maximale du pneumatique. La largeur axiale maximale du pneumatique est mesurée au niveau des flancs, le pneumatique étant monté sur sa jante et faiblement gonflé, c'est-à-dire gonflé à une pression égale à 10% de la pression nominale recommandée. Le plus souvent, mais pas exclusivement, la couche de travail radialement intérieure, c'est-à-dire la plus radialement intérieure, est la couche de travail la plus large.

La largeur axiale d'une couche de travail est la distance axiale entre les points d'extrémités de la couche de travail. Elle est usuellement mesurée sur une coupe méridienne du pneumatique, obtenue par découpage du pneumatique selon deux plans méridiens. A titre d'exemple, une coupe méridienne de pneumatique a une épaisseur selon la direction circonférentielle d'environ 60 mm au niveau de la bande de roulement. La mesure se fait en maintenant la distance entre les deux bourrelets identique à celle du pneumatique monté sur sa jante et faiblement gonflé.

En outre, la couche de travail radialement intérieure comprend une portion concave dont les limites axiales, de part et d'autre du plan équatorial, sont les points radialement extérieurs de ladite couche de sommet. Ces limites axiales sont généralement sensiblement équidistantes du plan équatorial, c'est-à-dire sensiblement symétriques par rapport au plan équatorial, aux tolérances de fabrication près, mais des distances différentes de part et d'autre du plan équatorial ne sont pas exclues. Une couche de travail large est nécessaire pour avoir une portion concave de largeur axiale significative.

Une portion concave, dans le plan méridien, comprend un point radialement intérieur dans le plan équatorial et deux points radialement extérieurs, de part et d'autre du plan équatorial, qui sont les limites axiales de la portion concave. Tous les points de la portion concave sont donc radialement extérieurs au point positionné dans le plan équatorial et radialement intérieurs aux points, limites axiales de la portion concave.

Une portion concave au sens de l'invention n'est pas une portion concave au sens mathématique du terme. En effet elle comprend une partie centrale concave au sens mathématique, avec, en tout point de ladite partie centrale concave, un centre de courbure radialement extérieur à ladite portion centrale concave, et, de part et d'autre de la partie centrale concave, une partie latérale convexe au sens mathématique, avec, en tout point de ladite partie latérale convexe, un centre de courbure radialement intérieur à ladite portion latérale convexe. La partie centrale concave est axialement délimitée par deux points d'inflexion, de part et d'autre du plan équatorial. Chaque partie latérale convexe est délimitée axialement à l'intérieur, par un point d'inflexion, et axialement à l'extérieur par une limite axiale de la portion concave.

Les autres couches de travail, radialement extérieures à la couche de travail intérieure, comprennent souvent une portion concave de largeur axiale sensiblement égale à celle de la portion concave de la couche de travail radialement intérieure. Ceci se produit en particulier lorsque les couches de travail sont deux à deux adjacentes et non séparées par des éléments intercalaires, par exemple, en matériau élastomérique. Les profils méridiens respectifs desdites couches de travail sont alors deux à deux parallèles, c'est-à-dire équidistants sur toutes leurs largeurs axiales respectives.

Afin de limiter l'augmentation des contraintes dans les couches de travail, une armature de frettage constituée d'au moins une couche de frettage, est mise en place entre la couche de carcasse la plus radialement extérieure et la couche de travail la plus radialement intérieure. Une telle armature de frettage, positionnée dans la zone médiane, a pour fonction de limiter les déplacements radiaux de l'armature de travail dans la zone médiane, lors du gonflage du pneumatique, et d'obtenir ainsi un profil de bande de roulement quasiment plat sur toute la largeur axiale de la surface de roulement. Elle permet également de limiter les surtensions dans les couches de travail au niveau du plan équatorial.

La configuration de la couche de frettage permettant le meilleur compromis vis-à-vis de l'endurance et du coût de matière première n'est étonnamment pas une couche de frettage continue, disposée sur la plus petite largeur possible, mais une couche de frettage discontinue, comprenant au moins une discontinuité axiale, ceci permettant par ailleurs de diminuer la masse de ladite couche de frettage.

Par discontinuité axiale, on entend une augmentation locale de pas entre deux éléments de renforcement consécutifs. Cette discontinuité axiale est caractérisée par sa largeur axiale, c'est-à-dire par la distance axiale entre les éléments de renforcement délimitant ladite discontinuité axiale. Selon l'invention, la couche de frettage comprend au moins une telle discontinuité axiale, dont la largeur axiale a une valeur minimale égale à trois fois le diamètre moyen D des éléments de renforcement. En effet disposer les éléments de renforcement de la couche de frettage selon la direction axiale de manière discontinue permet l'optimisation des répartitions des contraintes dans la couche d'armature de travail aux épaules ou au centre du pneumatique. De plus chacune de ces discontinuités dont la largeur est au moins égale à trois fois le diamètre moyen D des éléments de renforcement, diminue le nombre d'éléments de renforcement de la couche de frettage et donc le coût de la couche de frettage.

Il est particulièrement avantageux d'avoir la largeur axiale de discontinuité axiale au moins égale à 10 fois le diamètre moyen D des éléments de renforcement de la couche de frettage, car ceci diminue le nombre d'éléments de renforcement de la couche de frettage et permet des gains en coût de revient industriel.

Il est également avantageux que la couche de frettage comprenne au moins deux discontinuités axiales de largeur axiale au moins égale à trois fois le diamètre moyen D des éléments de renforcement. En effet ceci permet de répartir de façon optimale les éléments de renforcement de la couche de frettage de manière à optimiser les tensions dans les éléments de renforcement des couches de travail.

Il est encore avantageux d'avoir une discontinuité axiale centrée sur le plan équatorial du pneumatique. En effet disposer une discontinuité axiale centrée sur le plan équatorial du pneumatique permet de diminuer les tensions dans les éléments de renforcement de l'armature de travail aux épaules en augmentant les tensions dans les éléments de renforcement de l'armature de travail au centre.

Avantageusement deux discontinuités axiales sont symétriquement positionnées par rapport au plan équatorial. Dans un tel mode de réalisation, il y a une optimisation des phénomènes vibratoires du pneumatique en rotation.

Selon un mode de réalisation particulier, l'armature de frettage comprend deux couches de frettage. Un pneumatique pour avion en fonction de la pression nécessaire au port de la charge, selon son usage, peut nécessiter une armature de frettage constituée de deux couches de frettage.

Selon un mode de réalisation préféré, les éléments de renforcement d'une couche de frettage sont constitués de polyamides aliphatiques, de polyamides aromatiques ou d'une combinaison de polyamides aliphatiques et de polyamides aromatiques. De tels éléments de renforcement sont particulièrement avantageux pour leur faible masse et leur résistance à la rupture. En d'autres termes, le matériau constitutif des éléments de renforcement d'une couche de frettage est généralement le nylon ou l'aramide. Les éléments de renforcement peuvent être constitués d'un unique matériau ou combiner des matériaux différents. Par exemple, ils peuvent combiner des filés de filaments en nylon et en aramide, pour constituer des éléments de renforcement dits hybrides. Ces éléments de renforcement hybrides combinent avantageusement les propriétés d'extension du nylon et de l'aramide. Ce type de matériaux est utilisé avantageusement dans le domaine des pneumatiques pour avion en raison de leur faible densité, ce qui permet des gains en masse cruciaux dans le domaine aéronautique.

Il est particulièrement avantageux pour la reprise des tensions dans l'armature de travail de disposer les éléments de renforcement de cette armature parallèles entre eux et inclinés, par rapport à la direction circonférentielle (XX'), d'un angle compris entre +20° et -20°.

Il est également avantageux que les éléments de renforcement d'une couche de travail soient constitués de polyamides aliphatiques, de polyamides aromatiques ou d'une combinaison de polyamides aliphatiques et de polyamides aromatiques, en raison de leur faible masse et de leur niveau de résistance à la rupture. Là encore, le matériau constitutif des éléments de renforcement d'une couche de travail est soit le nylon, l'aramide ou l'hybride. Ce sont des matériaux usuels dans le domaine du pneumatique pour avion car ils présentent l'avantage de la légèreté.

Selon un mode de réalisation préféré, l'armature de carcasse comprend au moins une couche de carcasse comprenant des éléments de renforcement parallèles entre eux et faisant avec la direction circonférentielle, un angle compris entre 80° et 100°. Les éléments de renforcement d'une couche de carcasse sont constitués de polyamides aliphatiques, de polyamides aromatiques ou d'une combinaison de polyamides aliphatiques et de polyamides aromatiques. Là encore il est particulièrement avantageux d'utiliser de tels éléments de renforcement en raison de leur faible masse et leur résistance à la rupture.

Préférentiellement, une armature de protection, comprenant au moins une couche de protection constituée d'éléments de renforcement métallique ou textile, est disposée radialement à l'extérieur de l'armature de travail, pour préserver l'intégrité mécanique des couches de travail en cas de roulage sur un obstacle.

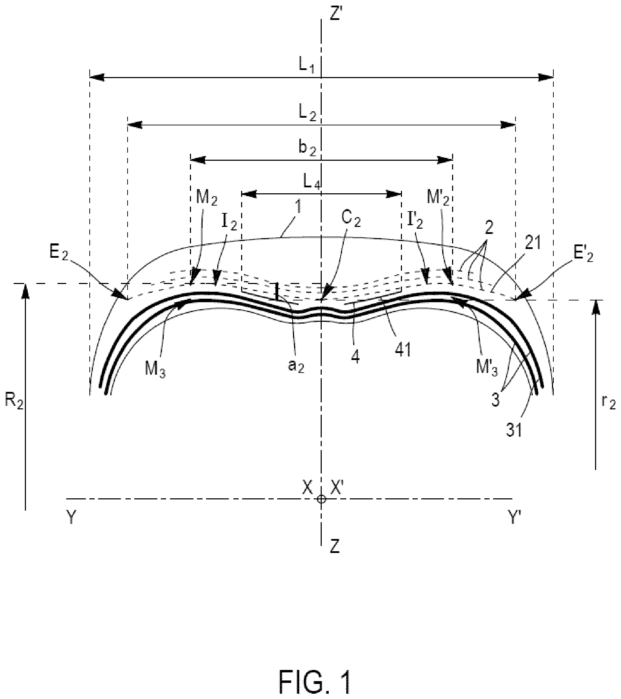

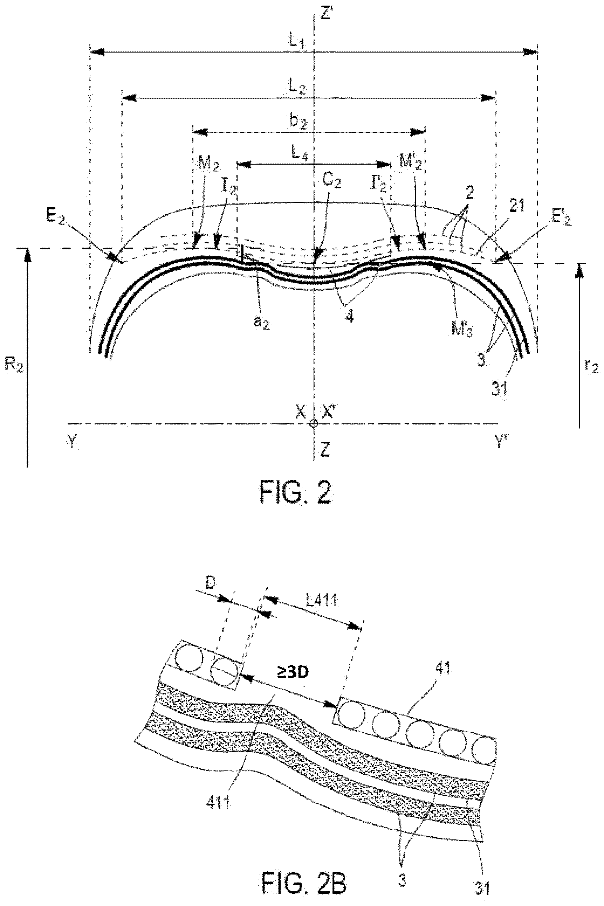

Les caractéristiques et autres avantages de l'invention seront mieux compris à l'aide des figures 1 et 2, les dites figures n'étant pas représentées à l'échelle mais de façon simplifiée, afin de faciliter la compréhension de l'invention.
- Figure 1 : couche de frettage avec 1 discontinuité axiale dans l'armature de frettage centrée sur le plan équatorial
- Figure 2 : couche de frettage avec 2 discontinuités axiales symétriques dans l'armature de frettage par rapport au plan équatorial
- Figure 2B : détail d'une discontinuité axiale dans l'armature de frettage

La figure 1 présente une coupe méridienne, c'est-à-dire dans un plan méridien, du sommet d'un pneumatique selon un premier mode de réalisation de l'invention comprenant une bande de roulement 1, une armature de travail 2 radialement intérieure à la bande de roulement 1, une armature de carcasse radiale 3 radialement intérieure à l'armature de travail 2 et une armature de frettage 4 radialement positionnée entre l'armature de travail 2 et l'armature de carcasse radiale 3, ladite armature de frettage 4 comprenant une couche de frettage 41 comprenant une discontinuité axiale dans le plan équatorial XZ.

Les directions respectivement radiale, axiale et circonférentielle sont les directions ZZ', YY' et XX'. Le plan équatorial XZ est défini par les directions radiale ZZ' et circonférentielle XX'.

L'armature de travail 2 est constituée de plusieurs couches de travail. La largeur axiale L2 de la couche de travail radialement intérieure 21, distance axiale entre ses extrémités axiales E2 et E'2, est au moins égale aux deux tiers de la largeur axiale maximale L1 du pneumatique. La largeur axiale maximale L1 du pneumatique est mesurée au niveau des flancs, le pneumatique étant monté sur sa jante et faiblement gonflé, c'est-à-dire gonflé à une pression égale à 10% de la pression nominale recommandée.

La couche de travail radialement intérieure 21 comprend une portion concave dont les limites axiales M2 et M'2, de part et d'autre du plan équatorial XZ, sont les points radialement extérieurs de ladite couche de travail, positionnés à la distance radiale R2. La couche de travail radialement intérieure 21 comprend en outre deux portions convexes axialement extérieures à ladite portion concave. Ces portions convexes sont respectivement limitées axialement à l'intérieur par les limites axiales M2 et M'2 de la portion concave et axialement à l'extérieur par les extrémités E2 et E'2 de la couche de travail.

La portion concave de la couche de travail radialement intérieure 21 comprend une partie concave au sens mathématique, axialement délimitée par les points d'inflexion I2 et I'2, et, de part et d'autre de ladite partie concave, une partie convexe au sens mathématique, axialement limitée à l'extérieur par une limite axiale M2 ou M'2 de ladite portion concave. L'amplitude de concavité a2 est la différence entre la distance radiale R2 des limites axiales M2 et M'2 et la distance radiale r2 du point C2 situé dans le plan équatorial XZ.

L'armature de carcasse 3 est constituée de plusieurs couches de carcasse. Dans la zone de sommet, radialement à l'intérieur de l'armature de travail 2, la couche de carcasse radialement extérieure 31 comprend une portion dont les limites axiales M3 et M'3, de part et d'autre du plan équatorial, sont à l'aplomb radial des points radialement extérieurs de couche de travail la plus radialement intérieure (M2, M'2), portion où la couche carcasse est de part et d'autre du plan équatorial radialement intérieure à ses extrémités respectives (M3, M'3) positionnés à la distance radiale R3 aux dispersions de fabrication près.

En outre, la figure 1 représente une armature de frettage 4, comprenant une couche de frettage 41, radialement positionnée entre la couche de travail radialement intérieure 21 et la couche de carcasse radialement extérieure 31. et disposant d'une discontinuité axiale 411 centrée sur le plan équatorial XZ.

La figure 2 présente une coupe méridienne du sommet d'un pneumatique selon un deuxième mode de réalisation de l'invention, dans lequel l'armature de frettage comprend une couche de frettage 41 comprenant 2 discontinuités axiales, symétriques par rapport au plan équatorial XZ, et de même largeur axiale. Les autres éléments d'architecture de la figure 2 étant identiques à ceux de la figure 1.

La figure 2B représente la couche de frettage 41 composée d'éléments de renforcement de diamètre moyen D, dans laquelle est représentée une discontinuité 411 de largeur L411, laquelle largeur est selon l'invention supérieure à 3 fois le diamètre moyen D.

Les inventeurs ont réalisé l'invention selon les deux modes de réalisation, avec une armature de frettage comprenant deux discontinuités axiales symétriques par rapport au plan équatorial, pour un pneumatique pour avion de dimension 46x17R20, dont l'usage est caractérisé par une pression nominale égale à 15.9 bars, une charge statique nominale égale à 20473 daN et une vitesse de référence maximale de 225 km/h.

Dans les pneumatiques étudiés, l'armature de travail est constituée de 6 couches de travail, dont les éléments de renforcement sont de type hybride. La couche de travail radialement intérieure a une largeur axiale de 300 mm, soit 0.75 fois la largeur axiale maximale du pneumatique. La largeur de concavité de ladite couche de travail radialement intérieure est égale à 160 mm, et l'amplitude de concavité est égale à 6mm. L'armature de carcasse est constituée de 3 couches de carcasse, dont les éléments de renforcement sont hybrides.

L'armature de frettage est constituée d'une couche de frettage, dont les éléments de renforcement sont de type hybride de diamètre moyen 1,11 mm. La largeur axiale de l'armature de frettage est égale à 80 mm, soit 0.20 fois la largeur axiale maximale du pneumatique. Pour les couches de travail et de frettage, les éléments de renforcement hybrides utilisés sont constitués de deux filés aramide de 330 tex chacun et d'un filé nylon de 188 tex. Le diamètre de l'élément de renforcement hybride obtenu est de 1.11 mm, son titre de 950 tex, sa torsion de 230 tr/m, son allongement sous 50 daN d'effort de 5.5%, sa force rupture de 110 daN.

Pour les couches de carcasse, les éléments de renforcement hybrides utilisés sont constitués de deux filés en aramide de 330 tex chacun et d'un filé nylon de 188 tex. Le diamètre de l'élément de renforcement hybride obtenu est de 1.1 mm, son titre de 980 tex, sa torsion de 270 tr/m, son allongement sous 50daN d'effort de 5.5%, sa force rupture de 110 daN. D'autres renforcements hybrides pourraient également être utilisés. On peut notamment envisager d'utiliser des renforcements de torsion différente, voire des renforcements dont le titre ou le nombre de chaque filé est différent.

Le passage d'un profil plat à un profil concave de la couche travail tel que décrit dans le brevet WO2013079351A1 génère une augmentation significative de tension dans les éléments de renforcement au centre des couches de travail d'environ +15% avec le même empilement d'éléments de renforcement des couches de sommet et avec le même rayon moyen du profil méridien radialement extérieur de la bande de roulement.

Augmenter la largeur axiale de la couche de frettage de 50mm en faisant passer sa largeur axiale de 80mm à 130mm permet de réduire les surtensions de l'ordre de 20% au centre des couches de l'armature de travail et de l'ordre de 18% au bord de l'armature de travail, mais en augmentant le coût des éléments de renforcements de frettage de 65%. L'utilisation d'une couche de frettage discontinue de largeur axiale totale égale à 130 mm, comprenant une portion médiane de largeur axiale égale à 80 mm et deux portions latérales, symétriques par rapport au plan équatorial et de largeurs axiales respectives égales à 10 mm, chaque portion latérale étant séparée de la portion médiane par une discontinuité ayant une largeur axiale égale à 20 mm , permet de réduire les surtensions au centre des couches de travail de l'ordre de 6% et au bord de l'armature de travail de l'ordre de 26% également en limitant l'augmentation du coût des éléments de renforcements de frettage à 25%.

Plus la couche de frettage est élargie par rapport au plan équatorial par l'introduction de discontinuités, plus l'effet est favorable sur les tensions dans les éléments de renforcement en extrémité de l'armature de travail. La position optimale des discontinuités dans la couche de frettage dépend de la disposition et de la largeur des couches de travail.

Utiliser des éléments de renforcements de la couche de frettage de nature différente, en aramide par exemple, permet dans la même configuration que précédemment de réduire les surtensions au centre des couches de travail de l'ordre de 36% et au bord de l'armature de travail de l'ordre de 49%.

Pour une armature de frettage en aramide, une des variantes préférées est réalisée en utilisant des bandes de 5 à 10 éléments de renforcements posés sur une largeur totale de 130 mm, en 6 portions, réparties de manière symétrique par rapport au plan équatorial, ces 6 portions étant séparées par des discontinuités de largeurs axiales comprises entre 10 à 20 mm. L'utilisation d'aramide et non d'hybride pour l'armature de frettage associée à cette disposition permet de réduire les surtensions au centre des couches de travail de l'ordre de 25% et au bord de l'armature de travail de l'ordre de 15%, atteignant le niveau des surtensions proches de celles de la solution possédant une couche de frettage hybride discontinue telle que décrite précédemment, donc satisfaisant les critères d'endurance, tout en diminuant le coût de la couche de frettage de 30% par rapport à cette solution.

## Revendications

1. Pneumatique pour avion comprenant :
- une bande de roulement (1),
- une armature de travail (2) radialement intérieure à la bande de roulement (1) et comprenant au moins une couche de travail,
- la couche de travail radialement intérieure (21) ayant une largeur axiale (L2) au moins égale aux deux tiers de la largeur axiale maximale (L1) du pneumatique et comprenant une portion concave,
- une armature de carcasse (3) radialement intérieure à l'armature de travail (2) et comprenant au moins une couche de carcasse (31),
- une armature de frettage (4) radialement extérieure à l'armature de carcasse et comprenant au moins une couche de frettage (41),
- la couche de frettage (41) ayant une largeur axiale (L4) au plus égale à 0.8 fois la largeur de la couche de travail la plus large et comprenant des éléments de renforcement parallèles entre eux et inclinés, par rapport à la direction circonférentielle (XX'), d'un angle compris entre +10° et -10°,
- les éléments de renforcement de la couche de frettage (41) ayant un diamètre moyen D,
**caractérisé en ce que** la couche de frettage (41) comprend au moins une discontinuité axiale (411) de largeur axiale (L411) au moins égale à trois fois le diamètre moyen D des éléments de renforcement.

2. Pneumatique pour avion selon la revendication 1, **dans lequel** la largeur axiale de discontinuité axiale (L411) est au moins égale à 10 fois le diamètre moyen D des éléments de renforcement de la couche de frettage (41).

3. Pneumatique pour avion selon la revendication 1 ou 2, **dans lequel** la couche de frettage (41) comprend au moins deux discontinuités axiales (411) de largeurs axiales (L411) au moins égale à trois fois le diamètre moyen D des éléments de renforcement de la couche de frettage (41).

4. Pneumatique pour avion selon l'une quelconque des revendications 1 à 3, **dans lequel** une discontinuité axiale (411) est centrée sur le plan équatorial (XZ) du pneumatique.

5. Pneumatique pour avion selon la revendication 3, **dans lequel** deux discontinuités axiales (411) sont symétriquement positionnées par rapport au plan équatorial (XZ).

6. Pneumatique pour avion selon l'une quelconque des revendications 1 à 5 **dans lequel** l'armature de frettage (4) comprend deux couches de frettage.

7. Pneumatique selon l'une quelconque des revendications 1 à 6, **dans lequel** les éléments de renforcement d'une couche de frettage (41) sont constitués de polyamides aliphatiques, de polyamides aromatiques ou d'une combinaison de polyamides aliphatiques et de polyamides aromatiques.

8. Pneumatique selon l'une quelconque des revendications 1 à 7, **dans lequel** une couche de travail (21) comprend des éléments de renforcement parallèles entre eux et inclinés, par rapport à la direction circonférentielle (XX'), d'un angle compris entre +20° et -20°.

9. Pneumatique selon l'une quelconque des revendications 1 à 8, **dans lequel** les éléments de renforcement d'une couche de travail (21) sont constitués de polyamides aliphatiques, de polyamides aromatiques ou d'une combinaison de polyamides aliphatiques et de polyamides aromatiques.

10. Pneumatique selon l'une quelconque des revendications 1 à 9 comprenant au moins une couche de carcasse (31) comprenant des éléments de renforcement parallèles entre eux et faisant avec la direction circonférentielle, un angle compris entre 80° et 100°, **dans lequel** les éléments de renforcement d'une couche de carcasse sont constitués de polyamides aliphatiques, de polyamides aromatiques ou d'une combinaison de polyamides aliphatiques et de polyamides aromatiques.

11. Pneumatique selon l'une quelconque des revendications 1 à 10, **dans lequel** une armature de protection, comprenant au moins une couche de protection constituée d'éléments de renforcement métallique ou textile, est disposée radialement à l'extérieur de l'armature de travail.

## Patentansprüche

1. Flugzeugreifen, welcher umfasst:
- einen Laufstreifen (1),
- eine Arbeitsbewehrung (2), die sich radial innerhalb des Laufstreifens (1) befindet und wenigstens eine Arbeitslage umfasst,
- wobei die radial innere Arbeitslage (21) eine axiale Breite (L2) aufweist, die wenigstens gleich zwei Dritteln der maximalen axialen Breite (L1) des Reifens ist, und einen konkaven Abschnitt umfasst,
- eine Karkassenbewehrung (3), die sich radial innerhalb der Arbeitsbewehrung (2) befindet und wenigstens eine Karkassenlage (31) umfasst,
- eine Umhüllungsbewehrung (4), die sich radial außerhalb der Karkassenbewehrung befindet und wenigstens eine Umhüllungslage (41) umfasst,
- wobei die Umhüllungslage (41) eine axiale Breite (L4) aufweist, die höchstens gleich dem 0,8-fachen der Breite der breitesten Arbeitslage ist, und Festigkeitsträger umfasst, die zueinander parallel und in Bezug auf die Umfangsrichtung (XX') um einen Winkel zwischen +10° und -10° geneigt sind,
- wobei die Festigkeitsträger der Umhüllungslage (41) einen mittleren Durchmesser D aufweisen,
**dadurch gekennzeichnet, dass** die Umhüllungslage (41) wenigstens eine axiale Diskontinuität (411) mit einer axialen Breite (L411) umfasst, die wenigstens gleich dem Dreifachen des mittleren Durchmessers D der Festigkeitsträger ist.

2. Flugzeugreifen nach Anspruch 1, wobei die axiale Breite (L411) der axialen Diskontinuität wenigstens gleich dem 10-fachen des mittleren Durchmessers D der Festigkeitsträger der Umhüllungslage (41) ist.

3. Flugzeugreifen nach Anspruch 1 oder 2, wobei die Umhüllungslage (41) wenigstens zwei axiale Diskontinuitäten (411) mit axialen Breiten (L411) umfasst, die wenigstens gleich dem Dreifachen des mittleren Durchmessers D der Festigkeitsträger der Umhüllungslage (41) sind.

4. Flugzeugreifen nach einem der Ansprüche 1 bis 3, wobei eine axiale Diskontinuität (411) auf der Äquatorialebene (XZ) des Reifens zentriert ist.

5. Flugzeugreifen nach Anspruch 3, wobei zwei axiale Diskontinuitäten (411) symmetrisch in Bezug auf die Äquatorialebene (XZ) positioniert sind.

6. Flugzeugreifen nach einem der Ansprüche 1 bis 5, wobei die Umhüllungsbewehrung (4) zwei Umhüllungslagen umfasst.

7. Reifen nach einem der Ansprüche 1 bis 6, wobei die Festigkeitsträger einer Umhüllungslage (41) aus aliphatischen Polyamiden, aromatischen Polyamiden oder einer Kombination von aliphatischen Polyamiden und aromatischen Polyamiden bestehen.

8. Reifen nach einem der Ansprüche 1 bis 7, wobei eine Arbeitslage (21) Festigkeitsträger umfasst, die zueinander parallel und in Bezug auf die Umfangsrichtung (XX') um einen Winkel zwischen +20° und -20° geneigt sind.

9. Reifen nach einem der Ansprüche 1 bis 8, wobei die Festigkeitsträger einer Arbeitslage (21) aus aliphatischen Polyamiden, aromatischen Polyamiden oder einer Kombination von aliphatischen Polyamiden und aromatischen Polyamiden bestehen.

10. Reifen nach einem der Ansprüche 1 bis 9, welcher wenigstens eine Karkassenlage (31) umfasst, die Festigkeitsträger umfasst, die zueinander parallel sind und mit der Umfangsrichtung einen Winkel zwischen 80° und 100° bilden, wobei die Festigkeitsträger einer Karkassenlage aus aliphatischen Polyamiden, aromatischen Polyamiden oder einer Kombination von aliphatischen Polyamiden und aromatischen Polyamiden bestehen.

11. Reifen nach einem der Ansprüche 1 bis 10, wobei eine Schutzbewehrung, die wenigstens eine aus metallischen oder textilen Festigkeitsträgern bestehende Schutzlage umfasst, radial außerhalb der Arbeitsbewehrung angeordnet ist.

## Claims

1. Tyre for an aeroplane, comprising:
- a tread (1),
- a working reinforcement (2) radially on the inside of the tread (1) and comprising at least one working layer,
- the radially internal working layer (21) having an axial width (L2) at least equal to two-thirds of the maximum axial width (L1) of the tyre and comprising a concave portion,
- a carcass reinforcement (3) radially on the inside of the working reinforcement (2) and comprising at least one carcass layer (31),
- a hoop reinforcement (4) radially on the outside of the carcass reinforcement and comprising at least one hooping layer (41),
- the hooping layer (41) having an axial width (L4) at most equal to 0.8 times the width of the widest working layer and comprising mutually parallel reinforcing elements that are inclined, with respect to the circumferential direction (XX'), at an angle of between +10° and -10°,
- the reinforcing elements of the hooping layer (41) having a mean diameter D,
**characterized in that** the hooping layer (41) comprises at least one axial discontinuity (411) having an axial width (L411) at least equal to three times the mean diameter D of the reinforcing elements.

2. Aeroplane tyre according to Claim 1, wherein the axial width (L411) of the axial discontinuity is at least equal to 10 times the mean diameter D of the reinforcing elements of the hooping layer (41).

3. Aeroplane tyre according to Claim 1 or 2, wherein the hooping layer (41) comprises at least two axial discontinuities (411) having axial widths (L411) at least equal to three times the mean diameter D of the reinforcing elements of the hooping layer (41).

4. Aeroplane tyre according to any one of Claims 1 to 3, wherein one axial discontinuity (411) is centred on the equatorial plane (XZ) of the tyre.

5. Aeroplane tyre according to Claim 3, wherein two axial discontinuities (411) are positioned symmetrically with respect to the equatorial plane (XZ) .

6. Aeroplane tyre according to any one of Claims 1 to 5, wherein the hoop reinforcement (4) comprises two hooping layers.

7. Tyre according to any one of Claims 1 to 6, wherein the reinforcing elements of a hooping layer (41) consist of aliphatic polyamides, aromatic polyamides or a combination of aliphatic polyamides and aromatic polyamides.

8. Tyre according to any one of Claims 1 to 7, wherein a working layer (21) comprises mutually parallel reinforcing elements that are inclined, with respect to the circumferential direction (XX'), at an angle of between +20° and -20°.

9. Tyre according to any one of Claims 1 to 8, wherein the reinforcing elements of a working layer (21) consist of aliphatic polyamides, aromatic polyamides or a combination of aliphatic polyamides and aromatic polyamides.

10. Tyre according to any one of Claims 1 to 9, comprising at least one carcass layer (31) comprising mutually parallel reinforcing elements that form an angle of between 80° and 100° with the circumferential direction, wherein the reinforcing elements of a carcass layer consist of aliphatic polyamides, aromatic polyamides or a combination of aliphatic polyamides and aromatic polyamides.

11. Tyre according to any one of Claims 1 to 10, wherein a protective reinforcement comprising at least one protective layer made up of metal or textile reinforcing elements is disposed radially on the outside of the working reinforcement.
